# EUROPEAN PATENT SPECIFICATION

(11) **EP 3 355 696 B1**
(45) Date of publication and mention of the grant of the patent: **26.01.2022**
(21) Application number: 16777879.4
(22) Date of filing: 26.09.2016
(51) Int. Cl.: A01N 25/10, A01N 25/22, A01N 55/02, A01N 59/16, A01P 1/00

(54) **METHOD OF PREPARING AN ANTIMICROBIAL COMPOSITION**
VERFAHREN ZUR HERSTELLUNG EINER ANTIMIKROBIELLEN ZUSAMMENSETZUNG
PROCÉDÉ DE PRÉPARATION D'UNE COMPOSITION ANTIMICROBIENNE

(30) Priority: 30.09.2015 US 201562234858 P
(43) Date of publication of application: 08.08.2018
(73) Proprietor: Nutrition & Biosciences USA 1, LLC, Rochester, NY 14623 (US); Rohm and Haas Company, Philadelphia, PA 19106 (US)
(72) Inventor: MITCHELL, Nicholas P., Collegeville, PA 19426 (US); RUSSELL, Brandon, Collegeville, PA 19426 (US); VARGO, Kevin B., Collegeville, PA 19426 (US)
(74) Representative: Houghton, Mark Phillip
(86) International application number: PCT/US2016/053692
(87) International publication number: WO 2017/058708

(56) References cited:
- EP-A1- 0 228 486
- EP-A2- 1 584 235
- EP-A2- 1 584 236
- WO-A1-2013/064798
- US-A- 5 561 097
- Bernabé L Rivas ET AL: "Water-soluble polymer-metal ion interactions", Progress in Polymer Science, 1 January 2003 (2003-01-01), pages 173-208, XP055325735, DOI: 10.1016/S0079-6700(02)00028-X Retrieved from the Internet: URL:http://ac.els-cdn.com/S007967000200028 X/1-s2.0-S007967000200028X-main.pdf?_tid=f 58fa66a-b8be-11e6-99a3-00000aacb35e&acdnat =1480704278_2618ca86ad2e8dc11d71743fd0e266 a4

## Description

The present invention relates to a method of preparing an antimicrobial composition.

The constant threat of microbial contamination and the associated repercussions on health and wellness as well as adverse effects microbes can cause to the aesthetics and durability of products have made antimicrobial solutions a ubiquitous component of consumer and institutional products. Many materials such as textiles, paints and coatings and building materials can support the growth of microbes and are often protected with antimicrobials. Some antimicrobials such as triclosan are no longer acceptable in many of these applications due to concerns around human and environmental safety. Some antimicrobials are acceptable, but are difficult to apply into or onto materials. Inorganic metal ions such as silver, copper and zinc can provide antimicrobial benefits to materials. However, many metal ion antimicrobials are supplied as inorganic particulates which are difficult to incorporate. Liquid, non-particulate formulations of metal antimicrobials are easier to incorporate, but these formulations often have poor stability and a short shelf life. There is therefore a need for the development of new stable liquid, non-particulate formulations of metal ions which are easy to incorporate into or apply onto materials and that can provide sustained antimicrobial efficacy.

US 7390774 discloses one such formulation. The cited reference describes an antimicrobial composition comprising a metal complexed with a polymer, wherein the metal is selected from copper, silver, gold, tin, zinc and combinations thereof. It has been discovered that while such compositions are efficacious, the formulations themselves do not have acceptable stability over extended periods of time. Thus there exists a need in the art to increase the stability of these metal/polymer antimicrobial compositions.

WO 2013/064798 discloses additives for use in wood preservation. US 5561097 discloses a method of controlling density of ligand coupled onto supports and products derived therefrom. EP 1584236 discloses a fibre substrate provided with an antibacterial finish containing a metal complexed with a polymer. Bernabé L Rivas et al disclose "Water-soluble polymer-metal ion interactions" in Progress in Polymer Science, 1 Jan 2003, pages 173-208.

The present invention solves the problem in the art by providing a method for preparing a stable formulation comprising:
i) providing a solution of:
   a) a salt of a metal, wherein the metal is silver;
   b) a nitrogen containing base selected from the group consisting of a primary amine selected from the group consisting of methylamine, monoethanolamine, and mixtures thereof, or ammonium hydroxide, or mixtures thereof; and
   c) water
ii) mixing the solution with a polymer wherein the polymer contains metal ion ligands selected from the group consisting of vinyl imidazole and vinyl pyridine,
   wherein "stable" means producing a mixture without precipitation upon mixing.

As used herein "stable" means producing a mixture without precipitation upon mixing. When a solution is said to be instable it means a precipitate has formed upon mixing.

To achieve the stable formulation of the present invention, the order of addition of the constituents of the formulation is of great importance. According to the present method, a solution comprising a soluble metal salt, a nitrogen containing base and water is provided. As used herein by soluble is meant that the metal salt completely dissolves in the solution of water and nitrogen containing base. The soluble metal salt is a salt of silver.

As used herein "nitrogen containing base" is defined as a primary amine or ammonium hydroxide. The primary amine is selected from the group consisting of methylamine, monoethanolamine and mixtures thereof. In the present invention mixtures of ammonium hydroxide and primary amines may also be used. The combination of the metal salt and primary amine may be accomplished by conventional methods known to those of ordinary skill in the art.

This solution is then mixed with a polymer which contains metal ion ligands selected from the group consisting of vinyl imidazole and vinyl pyridine. Suitable polymers containing metal ion ligands are described in US 7,390,774 and US 7,927,379. The combination of the solution and polymer may be accomplished by conventional methods known to those of ordinary skill in the art.

According to the present invention, additional water may be added. The water may be added at any point in the method. For example, additional water may be added to polymer. Alternatively, the water is added after the polymer is mixed with the solution. The amount of water added is determined by the desired metal ion concentration in the final formulation and by the desired ratio of metal ion to polymer.

Additionally, the method of the present invention may optionally include adding one or more antimicrobial agents, provided that the physical and chemical stability of the resultant antimicrobial composition is substantially unaffected by such inclusion. Antimicrobial agents suitable for use with the present invention include, for example, 3-iodo-2-propynylbutylcarbamate; 3-isothiazolones including 2-n-octyl-3-isothiazolone; zinc pyrithione; quaternary ammonium biocides such as dialkyldimethyl ammonium salts; trazole fungicides such as tebuconazole; 2-thiocyanomethylthio benzothiazole; thiobendazole; diiodomethyltolylsulfone; and phenolics such as 2,4,4'-trichloro-2'-hydroxy diphenyl ether.

Some embodiments of the present invention will now be described in detail in the following Examples. All fractions and percentages set forth below in the Examples are by weight unless otherwise specified.

### Description of Polymers

Table I describes the monomer composition of each polymer product

**Table I**

| Monomer Composition | Polymer 1 | Polymer 2 | Polymer 3 | Polymer 4 | Polymer 5 |
|---|---|---|---|---|---|
| 1-vinylimidazole (VI) | 45% | 20% | 75% | 75% | |
| 4-vinylpyridine (VP) | | | | | 30% |
| Poly(ethylene glycol) methyl ether | | | | 25% | 70% |
| methacrylate (Mn 300) glacial acrylic acid | 15% | 40% | 10% | | |
| butyl acrylate | 40% | 40% | 15% | | |
| % Polymer Solids | 32% | 31.2% | 31.8% | 32% | 31.1% |

The polymers of the present invention were prepared according to the methods described in US 7,390,774 and US 7,927,379.

### Examples 1-9: Method to formulate antimicrobial composition

Metal containing antimicrobial formulations were prepared using the following three order of addition methods with respective quantities listed in Table II:
Method A^{∗}) Polymer 1, aqueous metal nitrate solution, ammonium hydroxide, DI water;
Method B^{∗}) Polymer 1, ammonium hydroxide, aqueous metal nitrate solution, DI water;
Method C) Aqueous metal nitrate solution, ammonium hydroxide, polymer 1, DI water.

### ^{∗} Comparative

The formulation method was assessed by observation of precipitation upon mixing after the last component was added. Formulation stability is shown in Table III. Stability is indicated as an o and instability or precipitation is indicated as an x. Method C yields stable formulations which are compositions with VI:metal molar ratios of 11.6:1.

**Table II**

| Component | Form 1 | Form 2 | Form 3 | Form 4 | Form 5 | Form 6 | Form 7 | Form 8 | Form 9 |
|---|---|---|---|---|---|---|---|---|---|
| Silver Nitrate (50%) (g) | 0.31 | 0.31 | 0.31 | 0.00 | 0.00 | 0.00 | 0.00 | 0.00 | 0.00 |
| Copper Nitrate (50%) (g) | 0.00 | 0.00 | 0.00 | 0.00 | 0.00 | 0.00 | 0.45 | 0.45 | 0.45 |
| Zinc Nitrate (50%) (g) | 0.00 | 0.00 | 0.00 | 0.55 | 0.55 | 0.55 | 0.00 | 0.00 | 0.00 |
| Ammonium Hydroxide (28% ammonia) (g) | 0.45 | 0.68 | 0.90 | 0.45 | 0.68 | 0.90 | 0.45 | 0.68 | 0.90 |
| Polymer (g) | 7.04 | 7.04 | 7.04 | 7.04 | 7.04 | 7.04 | 7.04 | 7.04 | 7.04 |
| DI water (g) | 2.20 | 1.97 | 1.75 | 1.96 | 1.74 | 1.51 | 2.07 | 1.84 | 1.62 |

| | | | | | | | | | |
|---|---|---|---|---|---|---|---|---|---|
| ^{∗} Form=formulation | | | | | | | | | |

**Table III**

| | Example 1 | Example 2 | Example 3 | Example 4^{∗} | Example 5^{∗} | Example 6^{∗} | Example 7^{∗} | Example 8^{∗} | Example 9^{∗} |
|---|---|---|---|---|---|---|---|---|---|
| Metal | Silver | Silver | Silver | Zinc | Zinc | Zinc | Copper | Copper | Copper |
| Ammonia: metal ratio | 8:1 | 12:1 | 16:1 | 8:1 | 12:1 | 16:1 | 8:1 | 12:1 | 16:1 |
| Method A^{∗} | x | x | x | x | x | x | x | x | X |
| Method B^{∗} | x | x | x | x | x | x | x | x | X |
| Method C | o | o | o | o | o | o | o | o | o |

| | | | | | | | | | |
|---|---|---|---|---|---|---|---|---|---|
| ^{∗} Comparative | | | | | | | | | |

Examples 10-18: Method to formulate antimicrobial composition Metal containing antimicrobial formulations were prepared using the following three order of addition methods with respective quantities listed in Table IV:
Method A^{∗}) Polymer 1, aqueous metal nitrate solution, ammonium hydroxide, DI water;
Method B^{∗}) Polymer 1, ammonium hydroxide, aqueous metal nitrate solution, DI water;
Method C) Aqueous metal nitrate solution, ammonium hydroxide, polymer 1, DI water.

### ^{∗} Comparative

The formulation method was assessed by observation of precipitation upon mixing after the last component was added. Formulation stability is shown in Table V. Stability is indicated as an o and instability or precipitation is indicated as an x. Method C yields stable formulations which are compositions with VI:metal molar ratios of 8:1.

**Table IV**

| Component | Form 10 | Form 11 | Form 12 | Form 13 | Form 14 | Form 15 | Form 16 | Form 17 | Form 18 |
|---|---|---|---|---|---|---|---|---|---|
| Silver Nitrate (50%) (g) | 0.31 | 0.31 | 0.31 | 0.00 | 0.00 | 0.00 | 0.00 | 0.00 | 0.00 |
| Copper Nitrate (50%) (g) | 0.00 | 0.00 | 0.00 | 0.00 | 0.00 | 0.00 | 0.45 | 0.45 | 0.45 |
| Zinc Nitrate (50%) (g) | 0.00 | 0.00 | 0.00 | 0.55 | 0.55 | 0.55 | 0.00 | 0.00 | 0.00 |
| Ammonium Hydroxide (g) | 0.45 | 0.68 | 0.90 | 0.45 | 0.68 | 0.90 | 0.45 | 0.68 | 0.90 |
| Polymer (g) | 4.85 | 4.85 | 4.85 | 4.85 | 4.85 | 4.85 | 4.85 | 4.85 | 4.85 |
| DI water (g) | 4.39 | 4.16 | 3.94 | 4.15 | 3.93 | 3.70 | 4.25 | 4.03 | 3.80 |

**Table V**

| | Example 10 | Example 11 | Example 12 | Example 13^{∗} | Example 14^{∗} | Example 15^{∗} | Example 16^{∗} | Example 17^{∗} | Example 18^{∗} |
|---|---|---|---|---|---|---|---|---|---|
| Metal | Silver | Silver | Silver | Zinc | Zinc | Zinc | Copper | Copper | Copper |
| Ammonia: metal ratio | 8:1 | 12:1 | 16:1 | 8:1 | 12:1 | 16:1 | 8:1 | 12:1 | 16:1 |
| Method A^{∗} | x | x | x | x | x | x | x | x | X |
| Method B^{∗} | x | x | x | x | x | x | x | x | X |
| Method C | o | o | o | x | o | o | x | o | o |

| | | | | | | | | | |
|---|---|---|---|---|---|---|---|---|---|
| ^{∗} Comparative | | | | | | | | | |

### Comparative Examples 19-24: Method to formulate antimicrobial composition with various polymers

Zinc containing antimicrobial formulations were prepared using the following three order of addition methods with respective quantities listed in Table VI:
Method A) Indicated polymer from Table 1, aqueous zinc nitrate solution, ammonium hydroxide, DI water;
Method B) Indicated polymer from Table 1, ammonium hydroxide, aqueous zinc nitrate solution, DI water;
Method C) Aqueous zinc nitrate solution, ammonium hydroxide, indicated polymer from Table 1, DI water.

The formulation method was assessed by observation of precipitation upon mixing after the last component was added. Formulation stability is shown in Table VII. Stability is indicated as an o and instability or precipitation is indicated as an x. Method C yields stable formulations.

**Table VI**

| Component | Formulation 19 | Formulation 20 | Formulation 21 | Formulation 22 | Formulation 23 | Formulation 24 |
|---|---|---|---|---|---|---|
| Zinc Nitrate (50%) (g) | 0.55 | 0.55 | 0.55 | 0.55 | 0.55 | 0.55 |
| Ammonium Hydroxide (g) | 0.68 | 0.68 | 0.68 | 0.68 | 1.35 | 1.35 |
| Polymer product | Polymer 2 | Polymer 3 | Polymer 4 | Polymer 5 | Polymer 3 | Polymer 4 |
| Polymer (g) | 7.23 | 2.93 | 2.91 | 8.36 | 2.93 | 2.91 |
| DI water (g) | 1.55 | 5.85 | 5.86 | 0.42 | 5.17 | 5.19 |

**Table VII**

| | Example 19^{∗} | Example 20^{∗} | Example 21^{∗} | Example 22^{∗} | Example 23^{∗} | Example 24^{∗} |
|---|---|---|---|---|---|---|
| Ammonia:metal ratio | 12:1 | 12:1 | 12:1 | 12:1 | 24:1 | 24:1 |
| Method A | x | x | x | x | x | x |
| Method B | x | x | x | x | x | x |
| Method C | o | x | x | o | o | o |

| | | | | | | |
|---|---|---|---|---|---|---|
| ^{∗} Comparative | | | | | | |

### Comparative Examples 25-28: Method to formulate antimicrobial composition without ammonia

Zinc containing antimicrobial formulations were prepared using the following three order of addition methods with respective quantities listed in Table VIII:
Method A) Polymer 1, aqueous zinc nitrate solution, primary amine in Table VIII, DI water;
Method B) Polymer 1, primary amine in Table VIII, aqueous zinc nitrate solution, DI water;
Method C) Aqueous zinc nitrate solution, primary amine in Table VIII, polymer 1, DI water.

The amine:metal molar ratio was maintained at 16:1. The formulation method was assessed by observation of precipitation upon mixing after the last component was added. Formulation stability is shown in Table IX. Stability is indicated as an o and instability or precipitation is indicated as an x. Method C yields stable formulations for primary amines.

**Table VIII**

| Component | Formulation 25 | Formulation 26 | Formulation 27 | Formulation 28 |
|---|---|---|---|---|
| Zinc Nitrate (50%) (g) | 0.55 | 0.55 | 0.55 | 0.55 |
| Amine (g) | 1.67 | 1.50 | 0.91 | 1.15 |
| Amine | Dimethylamine | Triethylamine | Monoethanolamine | Methylamine |
| Polymer (g) | 4.85 | 4.85 | 4.85 | 4.85 |
| DI water (g) | 2.93 | 3.10 | 3.70 | 3.45 |

**Table IX**

| | Example 25^{∗} | Example 26^{∗} | Example 27^{∗} | Example 28^{∗} |
|---|---|---|---|---|
| Method A | x | x | x | x |
| Method B | x | x | x | x |
| Method C x | x | x | o | o |

| | | | | |
|---|---|---|---|---|
| ^{∗} Comparative | | | | |

Examples 29-32: Method to formulate antimicrobial composition at low metal levels Silver containing antimicrobial formulations were prepared using the following three order of addition methods with respective quantities listed in Table X:
Method A^{∗}) Polymer 1, aqueous silver nitrate solution, ammonium hydroxide, DI water;
Method B^{∗}) Polymer 1, ammonium hydroxide, aqueous silver nitrate solution, DI water;
Method C) Aqueous silver nitrate solution, ammonium hydroxide, polymer 1, DI water.

### ^{∗} Comparative

The formulation method was assessed by observation of precipitation upon mixing after the last component was added. Formulation stability is shown in Table XI. Stability is indicated as an o and instability or precipitation is indicated as an x. Method C yields stable 0.05% and 0.1% silver formulations.

**Table X**

| Component | Formulation 29 | Formulation 30 | Formulation 31 | Formulation 32 |
|---|---|---|---|---|
| Silver Nitrate (10%) (g) | 0.16 | 0.08 | 0.16 | 0.08 |
| Ammonium Hydroxide (g) | 0.07 | 0.03 | 0.14 | 0.07 |
| Polymer (g) | 0.48 | 0.24 | 0.48 | 0.24 |
| DI water (g) | 9.29 | 9.65 | 9.22 | 9.61 |

**Table XI**

| | Example 29 | Example 30 | Example 31 | Example 32 |
|---|---|---|---|---|
| Ammonia:metal ratio | 12:1 | 12:1 | 24:1 | 24:1 |
| Method A^{∗} | x | x | x | x |
| Method B^{∗} | x | x | x | x |
| Method C | x | x | o | o |

| | | | | |
|---|---|---|---|---|
| ^{∗} Comparative | | | | |

Example 33: Method to formulate antimicrobial composition at high metal levels Silver containing antimicrobial formulations were prepared using the following three order of addition methods with respective quantities listed in Table XII:
Method A^{∗}) Polymer 1, aqueous silver nitrate solution, ammonium hydroxide, DI water;
Method B^{∗}) Polymer 1, ammonium hydroxide, aqueous silver nitrate solution, DI water;
Method C) Aqueous silver nitrate solution, ammonium hydroxide, polymer 1, DI water.

### ^{∗} Comparative

The formulation method was assessed by observation of precipitation upon mixing after the last component was added. Formulation stability is shown in Table XIII. Stability is indicated as an o and instability or precipitation is indicated as an x.

Method C yields a stable 3% silver formulation.

**Table XII**

| Component | Formulation 33 |
|---|---|
| Silver Nitrate (50%) (g) | 0.94 |
| Ammonium | |
| Hydroxide (g) | 1.35 |
| Polymer (g) | 7.27 |
| DI water (g) | 0.43 |

**Table XIII**

| | Example 33 |
|---|---|
| Method A^{∗} | x |
| Method B^{∗} | x |
| Method C | o |

| | |
|---|---|
| ^{∗} Comparative | |

### Example 34: Method to formulate antimicrobial composition

Silver containing antimicrobial formulations were prepared using the following three order of addition methods with respective quantities listed in Table XIV:
Method A^{∗}) Polymer 1, aqueous silver nitrate solution, ammonium hydroxide, DI water;
Method B^{∗}) Polymer 1, ammonium hydroxide, aqueous silver nitrate solution, DI water;
Method C) Aqueous silver nitrate solution, ammonium hydroxide, polymer 1, DI water.

### ^{∗} Comparative

The formulation method was assessed by observation of precipitation upon mixing after the last component was added. Formulation stability is shown in Table XV. Stability is indicated as an o and instability or precipitation is indicated as an x. Method C yields a stable silver based formulation with a VI:silver molar ratio of 4.9:1 and an ammonia:metal molar ratio of 6.8:1.

**Table XIV**

| Recipe | Formulation 34 |
|---|---|
| Silver Nitrate (50%) (g) | 0.31 |
| Ammonium | |
| Hydroxide (g) | 0.38 |
| Polymer (g) | 2.97 |
| DI water (g) | 6.33 |

**Table XV**

| | Example 34 |
|---|---|
| Method A^{∗} | x |
| Method B^{∗} | x |
| Method C | o |

| | |
|---|---|
| ^{∗} Comparative | |

### Example 35: Method to formulate antimicrobial composition

Silver containing antimicrobial formulations were prepared using the following three order of addition methods with respective quantities listed in Table XVI with and without stirring:
Method A^{∗}) Polymer 1 diluted to 21% solids, aqueous silver nitrate solution, ammonium hydroxide, DI water;
Method B^{∗}) Polymer 1 diluted to 21% solids, ammonium hydroxide, aqueous silver nitrate solution, DI water;
Method C) Aqueous silver nitrate solution, ammonium hydroxide, polymer 1 diluted to 21% solids, DI water.

### ^{∗} Comparative

The formulation method was assessed by observation of precipitation upon mixing after the last component was added. Formulation stability is shown in Table XVII. Stability is indicated as an o and instability or precipitation is indicated as an x. Method C yields a stable formulation.

**Table XVI**

| Recipe | Formulation 35 |
|---|---|
| Silver Nitrate (50%) (g) | 0.90 |
| Ammonium | |
| Hydroxide (g) | 2.0 |
| Polymer (g) | 10.0 |

**Table XVII**

| | Example 35 | Example 35 |
|---|---|---|
| | No Stirring | Stirring |
| Method A^{∗} | x | x |
| Method B^{∗} | x | x |
| Method C | o | o |

| | | |
|---|---|---|
| ^{∗} Comparative | | |

## Claims

1. A method for preparing a stable formulation comprising:
i) providing a solution of:
a) a salt of a metal, wherein the metal is silver;
b) a nitrogen containing base selected from the group consisting of a primary amine selected from the group consisting of methylamine, monoethanolamine, and mixtures thereof, or ammonium hydroxide, or mixtures thereof; and
c) water
ii) mixing the solution with a polymer wherein the polymer contains metal ion ligands selected from the group consisting of vinyl imidazole and vinyl pyridine,
wherein "stable" means producing a mixture without precipitation upon mixing.

2. The method of claim 1 wherein the nitrogen containing base is ammonium hydroxide.

3. The method of claim 1 wherein the nitrogen containing base is a primary amine selected from the group consisting of methylamine, monoethanolamine, and mixtures thereof.

4. The method of claim 1 wherein water is added to the polymer.

5. The method of claim 1 wherein water is added after the polymer is mixed with the solution.

## Patentansprüche

1. Verfahren zur Herstellung einer stabilen Formulierung, das Folgendes umfasst:
i) Bereitstellen einer Lösung von:
a) einem Salz eines Metalls, wobei es sich bei dem Metall um Silber handelt,
b) einer stickstoffhaltigen Base aus der Gruppe bestehend aus einem primären Amin aus der Gruppe bestehend aus Methylamin, Monoethanolamin und Mischungen davon oder Ammoniumhydroxid oder Mischungen davon und
c) Wasser,
ii) Mischen der Lösung mit einem Polymer, wobei das Polymer Metallionenliganden aus der Gruppe bestehend aus Vinylimidazol und Vinylpyridin enthält,
wobei "stabil" das Herstellen einer Mischung ohne Ausfällung beim Mischen bedeutet.

2. Verfahren nach Anspruch 1, wobei es sich bei der stickstoffhaltigen Base um Ammoniumhydroxid handelt.

3. Verfahren nach Anspruch 1, wobei es sich bei der stickstoffhaltigen Base um ein primäres Amin aus der Gruppe bestehend aus Methylamin, Monoethanolamin und Mischungen davon handelt.

4. Verfahren nach Anspruch 1, wobei Wasser zu dem Polymer gegeben wird.

5. Verfahren nach Anspruch 1, wobei nach dem Mischen des Polymers mit der Lösung Wasser zugegeben wird.

## Revendications

1. Procédé pour la préparation d'une formulation stable comprenant :
i) la mise à disposition d'une solution composée :
a) d'un sel d'un métal, le métal étant l'argent ;
b) d'une base contenant de l'azote choisie dans le groupe constitué par une aminé primaire choisie dans le groupe constitué par la méthylamine, la monoéthanolamine, et des mélanges correspondants, et l'hydroxyde d'ammonium, et des mélanges correspondants ; et
c) d'eau
ii) le mélange de la solution avec un polymère, le polymère contenant des ligands d'ions métalliques choisis dans le groupe constitué par un vinylimidazole et une vinylpyridine,
« stable » signifiant la production d'un mélange sans précipitation lors du mélange.

2. Procédé selon la revendication 1, la base contenant de l'azote étant l'hydroxyde d'ammonium.

3. Procédé selon la revendication 1, la base contenant de l'azote étant une aminé primaire choisie dans le groupe constitué par la méthylamine, la monoéthanolamine, et des mélanges correspondants.

4. Procédé selon la revendication 1, de l'eau étant ajoutée au polymère.

5. Procédé selon la revendication 1, de l'eau étant ajoutée après que le polymère a été mélangé avec la solution.
